# EUROPÄISCHE PATENTANMELDUNG

(11) **EP 2 128 532 A2**
(43) Veröffentlichungstag der Anmeldung: **02.12.2009**
(21) Anmeldenummer: 09005029.5
(22) Anmeldetag: 04.04.2009
(51) Int. Cl.: F24D 19/10

(54) **Solarthermische Anlage mit einem Kreislauf für ein Wärmeträgermedium**

(30) Priorität: 29.05.2008 DE 202008007256 U
(71) Anmelder: PAW GmbH & Co. KG, 31789 Hameln (DE)
(72) Erfinder: Pommerening, Marc, Dipl.-Ing., 31789 Hameln (DE)
(74) Vertreter: Jabbusch, Matthias

(57) **Zusammenfassung**

Bei einer solarthermischen Anlage mit einem Kreislauf für ein Wärmeträgermedium ist vorgesehen, dass vom Kreislauf für das Wärmeträgermedium zumindest eine Stichleitung zu wenigstens einem Ausdehnungsbehälter abzweigt und dass diese Stichleitung zumindest abschnittsweise als Kühlkörper mit vergrößerter Oberfläche ausgebildet ist.

Mit dieser solarthermischen Anlage ist mit geringem aparativen Aufwand eine ausreichende Kühlung des Wärmeträgermediums ermöglicht.

## Beschreibung

Die Erfindung betrifft eine solarthermische Anlage mit einem Kreislauf für ein Wärmeträgermedium.

Solarthermische Anlagen werden zur Erwärmung von Flüssigkeiten, insbesondere von Wasser, genutzt. Sie weisen ein Wärmeträgermedium auf, das einer Erwärmung durch Sonnenstrahlung ausgesetzt wird. Dazu verfügen solarthermische Anlagen häufig über so genannte Kollektoren, welche z.B. auf geneigten Dachflächen der Sonne ausgesetzt werden und durch welche das Wärmeträgermedium geführt wird.

Weiterhin weisen solarthermische Anlagen häufig einen Speicher für das zu erwärmende Nutzwasser auf. Diese Speicher sind mit einer Flüssigkeitsinstallation verbunden, in welcher die erwärmte Flüssigkeit Verbrauchern zugeführt wird. Der Speicher ist regelmäßig in einem Keller angeordnet, Speicher und Kollektor sind mit Rohrleitungen wärmeträgermediumleitend verbunden.

Über diese Rohrleitungen wird der oben angegebene Kreislauf ausgebildet. Vom Kollektor führt ein Vorlauf in Richtung Speicher, vom Speicher ein Rücklauf wieder in Richtung Kollektor. Im Zuge dieses Kreislaufes sind in die Rohrleitungen Ventile, Armaturen, Anzeigeninstrumente und dergleichen Apparaturen eingesetzt. Insbesondere im Vorlauf können diese Armaturen hohen Temperaturen durch das Wärmeträgermedium ausgesetzt sein. Dieses erreicht bei intensiver Sonneneinstrahlung hohe Temperaturen über 100°C. Eine Gefährdung der Armaturen ist durch diese hohen Temperaturen ausgebildet. Insbesondere Dichtungen werden durch das heiße Medium belastet, so dass aufgrund der hohen Temperaturen Beschädigungen dieser Bauteile auftreten können.

In der DE 10 2006 009 112 A1 ist für eine solarthermische Anlage vorbezeichneter Gattung eine Kühlmöglichkeit des Wärmeträgermediums dadurch vorgeschlagen worden, dass an den Kreislauf ein Kühlmittel, nämlich Wasser, herangeführt wird. Das Heranführen eines Kühlmittels erfordert aber einen aparativen Aufwand, denn das Kühlmittel ist zu fördern und abzufördern. Dazu ist zudem eine Steuerungsanlage notwendig.

Der Erfindung liegt die Aufgabe zugrunde, eine solarthermische Anlage der eingangs genannten Gattung aufzuzeigen, mit der mit geringerem aparativen Aufwand eine ausreichende Kühlung des Wärmeträgermediums ermöglicht ist.

Diese Aufgabe ist erfindungsgemäß dadurch gelöst, dass vom Kreislauf für das Wärmeträgermedium zumindest eine Stichleitung zu wenigstens einem Ausdehnungsbehälter abzweigt und dass diese Stichleitung zumindest abschnittsweise als Kühlkörper mit vergrößerter Oberfläche ausgebildet ist.

Bei den erfindungsgemäßen Anlagen wird kein Kühlmedium verwendet, so dass ein aparativer Aufwand zur Leitung und Förderung eines Kühlmediums nicht erforderlich ist. Der Kühlkörper ist vielmehr durch eine Leitung selbst ausgebildet, indem diese zumindest abschnittsweise eine vergrößerte Oberfläche aufweist.

Erfindungsgemäß ist vorgesehen, dass dieser Kühlkörper nicht direkt in den Vorlauf oder Rücklauf des Kreislaufes eingesetzt ist, sondern in eine Stichleitung zu einem Ausdehnungsbehälter. Es wird also ein Ausdehnungsbehälter zur Verfügung gestellt, in den heißes Wärmeträgermedium sich ausdehnen und fließen kann, dabei passiert es den Kühlkörper und wird abgekühlt. Das Wärmeträgermedium kann aus einer Dampfphase geführt werden und als Flüssigkeit in den Ausdehnungsbehälter gelangen. Dadurch wird die Temperatur des Wärmeträgermediums reduziert und werden im Kreislauf befindliche Armaturen und Apparaturen vor dem heißen Wärmeträgermedium geschützt.

Nach einer ersten Weiterbildung der Erfindung ist vorgesehen, dass der Kühlkörper durch einen in Windungen ausgeführten Abschnitt der Stichleitung ausgebildet ist. Aufgrund der Windungen verläuft die Stichleitung mäanderartig, sie weist eine größere Länge und damit eine größere Oberfläche auf. Die Kühlung des durch ein heißes Wärmeträgermedium aufgeheizten Kühlkörpers erfolgt durch Umgebungsluft, ein flüssiges Medium zur Aufnahme der Wärme ist nicht erforderlich. Der Kühlkörper kann entsprechend dimensioniert werden, um zu erwartende Temperaturspitzen abbauen zu können. Bei der Installation der solarthermischen Anlage ist es daher nicht mehr erforderlich, dass vor Ort eine Bestimmung der Größe einer Kühlmöglichkeit erfolgt, die richtige Größe des Kühlkörpers kann bereits werkmäßig vorgesehen sein.

Ein derartiger Kühlkörper kann auch durch einen als Rippenrohr ausgeführten Abschnitt der Stichleitung ausgebildet sein. Auch hier erfolgt eine Vergrößerung der Oberfläche der Stichleitung durch Aufteilung der Stichleitung in mehrere Teilrippen.

Nach einer nächsten Weiterbildung ist vorgesehen, dass die Stichleitung unmittelbar an den Kreislauf angeschlossen ist. Diese Unmittelbarkeit ist **dadurch gekennzeichnet, dass** zwischen Stichleitung und Kreislauf keine Klappen oder Ventile angeordnet sind. Einem Ausweichen eines heißen, insbesondere dampfförmigen Wärmeträgermediums in die Stichleitung hinein steht kein Ventil im Wege.

Bevorzugt ist die Stichleitung an den Vorlauf des Kreislaufs angeschlossen. Der Vorlauf wird von dem Kollektor hergeführt, er enthält also das gerade aufgeheizte Wärmeträgermedium. Hier sind die Temperaturen am höchsten und hier kann am ehesten eine Beschädigung einer Armatur im Kreislauf auftreten. Natürlich ist es auch möglich, die Stichleitung im Rücklauf des Kreislaufes abzuzweigen.

Zur besonderen konstruktiven Ausbildung ist vorgesehen, dass die Stichleitung im räumlichen Bereich einer Solarstation an den Kreislauf angeschlossen ist, wobei die Solarstation Bauelemente zur Förderung des Mediums und/oder zur Steuerung der Anlage aufweist. Eine Solarstation ist regelmäßig Teil einer solarthermischen Anlage. Eine derartige Station ist häufig eine kompakte Baugruppe für den Vor- und Rücklauf, sie enthält Pumpen und Armaturen, wie Absperrorgan, Thermometer, Schwerkraftbremse, Volumendruckmesser, Luftfang, Schmutzfänger, Manometer sowie Sicherheitsventil. Dies sind zum Teil die durch ein heißes Wärmeträgermedium gefährdeten Bauteile, so dass es sinnvoll ist, die Stichleitung zur Ableitung heißen Wärmeträgermediums hier an den Kreislauf anzuschließen. Der Kühlkörper kann auf diese Weise der Solarstation zugeordnet sein, wobei es sogar möglich ist, die Solarstation an dem als Kühlkörper ausgebildeten Abschnitt der Stichleitung anzuordnen und zu befestigen. Damit wird der Kühlkörper sogleich als Aufnahmeelement für die Solarstation ausgenutzt, da er aufgrund seiner z.B. in Windungen vorliegenden Bauweise eine mechanische Festigkeit aufweist.

Bevorzugt kann vorgesehen sein, dass der Kühlkörper und die Solarstation ein und dasselbe Gehäuse aufweisen. Auf diese Weise wird durch die Solarstation und deren Gehäuse bevorzugt eine Abdeckung des Kühlkörpers erreicht. Damit ist der Kühlkörper gegen ein Berühren durch Personen geschützt, vorteilhaft tritt ein Schutz für diese Personen gegen eine Verbrennung durch Anfassen am Kühlkörper ein.

Ein Ausführungsbeispiel, aus dem sich weitere erfinderische Merkmale ergeben, ist in der Zeichnung dargestellt. Es zeigen:
- Fig. 1:: eine schematische Ansicht einer solarthermischen Anlage,
- Fig.2:: eine perspektivische Ansicht eines Bauteils der solarthermischen Anlage gemäß Fig. 1, und
- Fig. 3:: eine weitere perspektivische Ansicht des Bauteils gemäß Fig. 2.

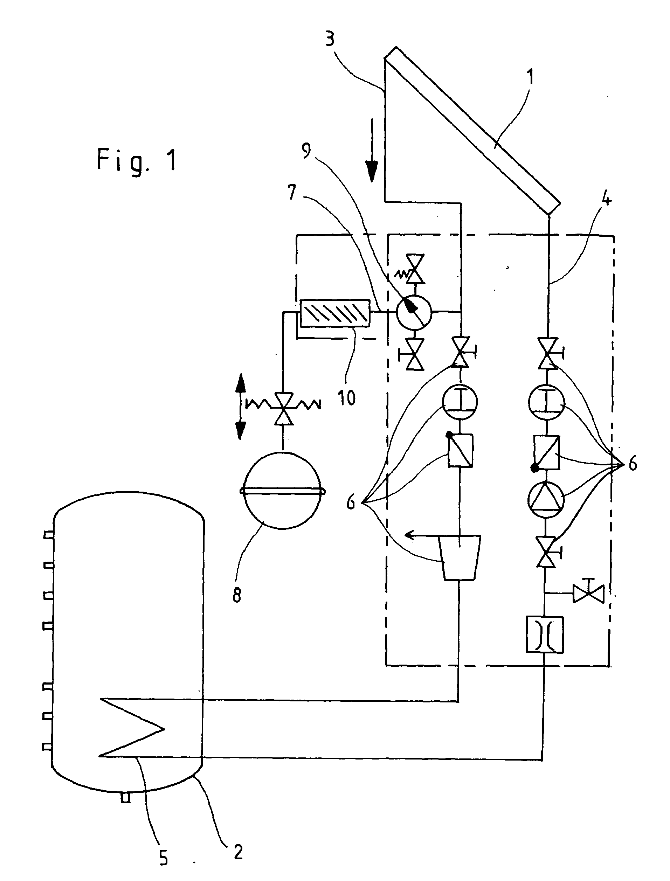

Die solarthermische Anlage in Fig. 1 weist einen Kollektor 1 sowie einen Speicher 2 auf. Das im Kollektor 1 durch Sonneneinstrahlung erwärmte Wärmeträgermedium wird über einen Kreislauf, der aus einem Vorlauf 3 und einem Rücklauf 4 besteht zum Speicher 2 hingeführt, bzw. vom Speicher 2 weggeführt. Innerhalb des Speichers 2 geht der Vorlauf 3 in einem Wärmetauscher 5 in den Rücklauf 4 über.

Im Vorlauf 3 wie im Rücklauf 4 sind in dem Kreislauf einige Armaturen, Ventile, Luftfänge, Schmutzfänger, Manometer oder ähnliche Bauelemente 6 eingesetzt.
Weiterhin ist eine Stichleitung 7 vorgesehen, welche vom Vorlauf 3 abzweigt und in einen Ausdehnungsbehälter 8 führt. Der Abzweig der Stichleitung 7 von dem Vorlauf 3 erfolgt in Fließrichtung des Wärmeträgermediums vor den Bauelementen 6. Die Stichleitung 7 ist unmittelbar an den Vorlauf 3 angeschlossen, in der Stichleitung 7 ist ein Durchflussanzeiger 9 bzw. Thermometer 9 angeordnet, Klappen und Ventile sind nicht vorgesehen.

In der Stichleitung 7 ist weiterhin ein Kühlkörper 10 angeordnet. Dieser Kühlkörper 10 wird durch einen Abschnitt der Stichleitung 7 selbst ausgebildet.

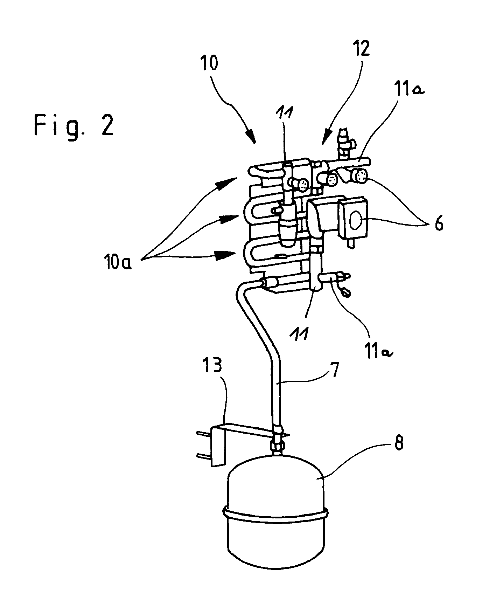

Fig. 2 zeigt die Stichleitung 7 in vertikaler Ausrichtung zu dem Ausdehnungsbehälter 8. In einem oberen Abschnitt ist die Stichleitung 7 in Windungen 10a geführt. Vorlauf 3 und Rücklauf 4 sind in Fig. 2 nicht dargestellt, lediglich Anschlüsse 11 innerhalb einer Solarstation 12, welche die Armaturen 6 aufnimmt. Die Solarstation 12 nimmt die Bauelemente 6 und weitere Anschlüsse 11a in kompakter Form auf. Dabei ist die Solarstation 12 an den Windungen 10a angeordnet, die Windungen 10a bilden dabei den Kühlkörper 10 aus. Unter Einsatz eines Winkels 13 kann die gesamte Baueinheit aus Ausdehnungsbehälter 8, Stichleitung 7, Kühlkörper 10 und Solarstation 12 an einer nicht weiter dargestellten Wand befestigt werden. Der Kühlkörper 10 wird dabei an einen Montageort, beispielsweise einer Wand, angebracht, die Solarstation 2 anschließend an dem Kühlkörper 10 befestigt. Über den Winkel 13 wird das Gewicht des Ausdehnungsbehälters 8 abgefangen.

Der Kühlkörper 10 hat somit eine Montageeinrichtung zur Aufnahme der Solarstation 2. Er kann mechanisch so ausgeführt sein, dass er am ursprünglichen Montageort der Solarstation 12 befestigt wird und dann selbst als Montageort für die Solarstation 12 dient.

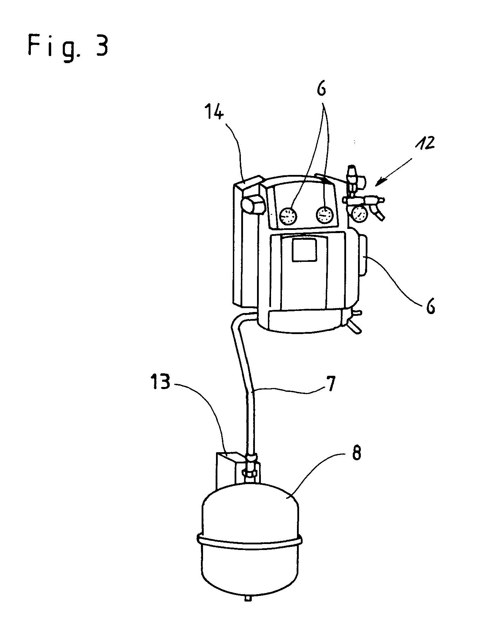

Fig. 3 zeigt, dass die Solarstation 12 und der Kühlkörper 10 durch ein gemeinsames Gehäuse 14 abgedeckt werden können. Das Gehäuse 14 weist Ausnehmungen auf, durch die Bauelemente 6 sichtbar und betätigbar sind.

## Patentansprüche

1. Solarthermische Anlage mit einem Kreislauf für ein Wärmeträgermedium,
**dadurch gekennzeichnet,**
**dass** vom Kreislauf für das Wärmeträgermedium zumindest eine Stichleitung (7) zu wenigstens einem Ausdehnungsbehälter (8) abzweigt und dass diese Stichleitung (7) zumindest abschnittsweise als Kühlkörper (10) mit vergrößerter Oberfläche ausgebildet ist.

2. Solarthermische Anlage nach Anspruch 1, **dadurch gekennzeichnet, dass** der Kühlkörper (10) durch einen in Windungen (10a) ausgeführten Abschnitt der Stichleitung (7) ausgebildet ist.

3. Solarthermische Anlage nach Anspruch 1, **dadurch gekennzeichnet, dass** der Kühlkörper (10) durch einen als Rippenrohr ausgeführten Abschnitt der Stichleitung ausgebildet ist.

4. Solarthermische Anlage nach einem der vorhergehenden Ansprüche, **dadurch gekennzeichnet, dass** die Stichleitung (7) unmittelbar an den Kreislauf angeschlossen ist.

5. Solarthermische Anlage nach einem der vorhergehen Ansprüche, **dadurch gekennzeichnet, dass** die Stichleitung (7) an den Vorlauf (3) des Kreislaufs angeschlossen ist.

6. Solarthermische Anlage nach einem der vorhergehenden Ansprüche, **dadurch gekennzeichnet, dass** die Stichleitung (7) im räumlichen Bereich einer Solarstation (12) an den Kreislauf angeschlossen ist, wobei die Solarstation (12) Bauelemente (6) zur Förderung des Mediums und/oder zur Steuerung der Anlage aufweist.

7. Solarthermische Anlage nach Anspruch 6 oder 7, **dadurch gekennzeichnet, dass** der Kühlkörper (10) der Solarstation (12) zugeordnet ist.

8. Solarthermische Anlage nach Anspruch 6, **dadurch gekennzeichnet, dass** die Solarstation (12) an dem als Kühlkörper (10) ausgebildeten Abschnitt der Stichleitung (7) angeordnet ist.

9. Solarthermische Anlage nach einem der Ansprüche 7 oder 8, **dadurch gekennzeichnet, dass** der Kühlkörper (10) und die Solarstation (12) ein und dasselbe Gehäuse (14) aufweisen.
